Europäisches Patentamt

(19) European Patent Office

Office européen des brevets

(11) Veröffentlichungsnummer: **0 249 861 B1**

(12) **EUROPÄISCHE PATENTSCHRIFT**

(45) Veröffentlichungstag der Patentschrift: **19.06.91**

(51) Int. Cl.⁵: **C02F 3/12**, B01D 53/00, B08B 9/00

(21) Anmeldenummer: **87108345.7**

(22) Anmeldetag: **10.06.87**

(54) **Verfahren zur biologischen Abluft- und Abwasserreinigung.**

(30) Priorität: **20.06.86 DE 3620728**

(43) Veröffentlichungstag der Anmeldung:
**23.12.87 Patentblatt 87/52**

(45) Bekanntmachung des Hinweises auf die
Patenterteilung:
**19.06.91 Patentblatt 91/25**

(84) Benannte Vertragsstaaten:
**AT BE CH DE ES FR GB IT LI NL SE**

(56) Entgegenhaltungen:
**DE-A- 1 542 274**
**DE-A- 2 334 107**
**DE-A- 2 554 169**

(73) Patentinhaber: **BAYER AG**

**W-5090 Leverkusen 1 Bayerwerk(DE)**

(72) Erfinder: **Melin, Thomas, Dr.**
**Haferkamp 6**
**W-5000 Köln 80(DE)**
Erfinder: **Stracke, Hubert, Dr.**
**Volkhovener Strasse 4**
**W-5000 Köln 71(DE)**
Erfinder: **Barth, Otto**
**Zehntweg 62**
**W-5060 Bergisch-Gladbach(DE)**

## Beschreibung

Die Erfindung geht aus von einem Verfahren zur biologischen Abgasreinigung, bei dem das Abgas in Kontakt mit einer Flüssigkeit durch eine Bodenkolonne geleitet wird, die mit einem Flüssigkeitsinhalt pro Boden von mehr als 0,07 m³ pro m² Kolonnenquerschnitt betrieben wird.

Ein Verfahren dieser Art wird grundsätzlich in DE-A 15 42 274 beschrieben. Die Zielrichtung liegt dabei jedoch nicht auf dem Gebiet der biologischen Abgasreinigung. Im Vordergrund steht vielmehr eine allgemeine Verbesserung der Verfahrenstechnik zur Durchführung langsam verlaufender chemischer Reaktionen zwischen einer Reaktionsflüssigkeit und einem Gas, wobei die Reaktionsflüssigkeit eine Lösung ist. Störende Sedimentationseffekte und das Problem des Bewuchses mit Biomasse können daher in diesem Fall nicht auftreten. Ferner sind bei diesem Verfahren Leitbleche auf den Böden vorgesehen, um neben dem Begasungsraum liegende Reaktionsräume zu schaffen, wodurch die Verweilzeit des Gases in der Flüssigkeit vergrößert wird. Die Begasung wird dabei auf einen relativ schmalen Bereich in der Kolonnenmitte beschränkt; d.h. es wird nur ein relativ kleiner Teil des Kolonnenquerschnitts ausgenutzt.

An Biowäscher bzw. Biofilter für die biologische Abluftreinigung werden folgende Anforderungen gestellt:

1. Hohe Wirksamkeit, d.h. möglichst vollständige Entfernung von Schad- bzw. Geruchsstoffen aus der Abluft;
2. Kleine Abmessungen, insbesondere kleine Querschnittsfläche (Platzbedarf);
3. Geringer Energieaufwand (Betriebskosten);
4. Einfacher Aufbau und Betrieb;
5. Wirksamkeit für eine möglichst breite Palette von Schadstoffen in möglichst großen Konzentrationsbereichen.

Besonders schwierig wird die Erfüllung dieser Anforderungen, wenn wegen hohen Schadstoffgehalts der Abluft und des damit meist verbundenen hohen Sauerstoffbedarfs für den biologischen Abbau oder wegen geringer Wasserlöslichkeit der zu entfernenden Komponenten hohe Anforderungen an die Stoffaustauschleistung gestellt werden.

Bei einer detaillierten Untersuchung der bekannten Biowäscher bzw. Biofilter stellt man fest, daß alle in zumindest einem, meist aber hinsichtlich mehrerer der oben aufgeführten Kriterien erhebliche Mängel aufweisen.

Praktisch alle Biofilter können nur bei geringen Gasgeschwindigkeiten (-0,1 m/s oder darunter) betrieben werden und erfordern daher große Flächen. Bei hohem Schadstoffgehalt und damit verbundenem hohen Biomassewachstum neigen sie zum Zuwachsen. Entstehen beim biologischen Abbau starke Säuren (HCl, HF, $H_2SO_4$ oder $HNO_3$) wie z.B. beim Abbau von halogenierten Kohlenwasserstoffen bzw. verschiedenen Schwefel- oder Stickstoffverbindungen, so sinkt der pH-Wert in den Biofiltern (z.B. Kompostfiltern) und die biologische Abbauleistung kommt zum Stillstand, wenn man nicht durch Basenzugabe eine pH-Regelung durchführt, was den Druckverlust erhöht und Maldistributionsprobleme (Flüssigkeitsrandgängigkeit bei Gegenstrom) oder Wirksamkeitsverluste (Flüssigkeit schleppt Schadstoff mit!) mit sich bringt.

Die bekannten Biowäscher, z.B. Düsenwäscher, Füllkörperoder konventionelle Bodenkolonnen (siehe z.B. Jap. Pat. Anmeldung No. 51-67048) mit nachgeschaltetem Bioreaktor weisen als Hauptnachteil den zum Transport von gelösten Schadstoffen und gelöstem Sauerstoff meist erforderlichen extrem großen Flüssigkeitsstrom vom Wäscher zum Bioreaktor und zurück auf. Dieser Nachteil läßt sich zwar durch Zugabe von Sorbentien (z.B. Aktivkohle) verringern; diese Maßnahmen bringen aber neue Nachteile (Abrasion, Unterhaltungs- und Investitionskosten für Kohlebunkerung und Entsorgung) mit sich.

Als weiterer Nachteil im Falle der Düsenwäscher erweist sich die steigende Komplexität der Anlage, wenn geringe Löslichkeit der Schadstoffe und/oder geringe zulässige Endkonzentration eine mehrstufige Ausführung erforderlich machen.

Hier setzt die Erfindung an. Es lag die Aufgabe zugrunde, ein Verfahren mit den dazugehörigen Apparaturen zur biologischen Abluft- und Abwasserreinigung zu entwickeln, das die oben aufgeführten Forderungen möglichst kompromißlos erfüllt.

Diese Aufgabe wird, ausgehend von dem eingangs beschriebenen Verfahren, erfindungsgemäß dadurch gelöst,

a) daß die Biomasse in Form einer wäßrigen Suspension über die Böden verteilt wird,

b) daß das zu reinigende Gas durch Einbauten mit Gasaustrittsöffnungen in den oberen Teil der auf den Böden befindlichen Flüssigkeitsschicht geleitet wird,

c) und daß die Flüssigkeitsschicht durch Leitbleche oder Leitrohre alternierend in begaste Zonen mit Aufwärtsströmung und unbegaste Zonen mit Abwärtsströmung unterteilt wird, wobei um die Leitbleche oder Leitrohre herum Konvektionsströmungen erzeugt werden.

Im Gegensatz zu den bei Destillation und Absorption üblichen Böden mit einem verhältnismäßig geringen Flüssigkeitsinhalt (Holdup) von maximal 0,05 m³ pro m² Bodenfläche wird bei dem erfindungsgemäßen Verfahren ein großer Holdup angestrebt, um das benötigte Reaktionsvolumen bei nicht allzu großer Bodenzahl zu erreichen. Da andererseits je nach angestrebter Endreinheit des Gases und Löslichkeit und Anfangskonzentration der Schadstoffe für die Absorption der Schadstoffe bzw. des zum aeroben Abbau benötigten Sauerstoffs eine bestimmte Bodenzahl erforderlich ist, wird sich je nach Anwendungsfall ein bestimmter optimaler Flüssigkeits-Holdup pro Boden ergeben, der etwa zwischen 0,07 und 2 $m^3/m^2$ Bodenfläche liegt.

Die bei konventionellen Böden übliche Begasung durch die gesamte Flüssigkeit hindurch führt bei den angestrebten Flüssigkeitshöhen zu hohem Druckverlust der Gasströmung und damit zu großem Energieverbrauch. Dieses Problem wird im vorliegenden Fall dadurch gelöst, daß nur ein Teil der Flüssigkeit begast wird, indem das Gas durch mit dem Boden verbundene Kamine oder Kanäle, die die verschiedensten Formen haben können, durch die untere (unbegaste) Flüssigkeitsschicht geführt wird und erst dann durch Schlitze oder Löcher in den genannten Kaminen oder Kanälen oder in an diesen oder an den Böden oder der Wand befestigten Einbauten (z.B. sog. Glocken) oder beweglichen Einbauten (z.B. sog. Ventilen) in die Flüssigkeit austritt. Die mit dieser Teilbegasung normalerweise verbundenen Nachteile, der schlechte Stoffaustausch zwischen unbegaster und begaster Flüssigkeit und die Sedimentation von Biomasse im unbegasten Bereich werden erfindungsgemäß dadurch vermieden, daß durch im wesentlichen vertikale Einbauten (Leitbleche bzw. Leitrohre), welche den Flüssigkeitsraum in begaste Aufwärtsbewegungszonen und unbegaste Abwärtsbewegungszonen unterteilen, Konvektionsströmungen erzeugt werden. Dazu sind die Leitbleche bzw. Leitrohre so bemessen und angeordnet, daß zwischen Boden und Unterkante der Leitbleche bzw. Leitrohre und zwischen Oberkante derselben und der Flüssigkeitsoberfläche sich ein für die Umströmung ausreichender Zwischenraum befindet. Die Höhe der Flüssigkeit (Gas-Flüssig-Sprudelschicht) wird bestimmt durch die Oberkante der Ablaufrohre bzw. Ablaufschächte sowie die Flüssigkeitsüberhöhung über das Ablaufwehr (analog zu den Verhältnissen bei konventionellen Böden).

Bei den zu verwendenden gasführenden Einbauten kann eine Spülung der dem Gasraum zugewandten Innenflächen der Kanäle von anhaftender Biomasse besonders leicht durchgeführt werden, wenn jeweils unter den Böden Rohre mit geeignet angebrachten Sprühdüsen und Sprühlöchern senkrecht zu den Kanälen angebracht werden. Diese Rohre sind vorzugsweise um ihre Längsachse drehbar. Dadurch kann der Spüleffekt verbessert werden.

Der entscheidende Unterschied des erfindungsgemäßen Verfahrens gegenüber einem konventionellen Biowäscher besteht darin, daß der größte Teil des zum Bioabbau benötigten Volumens in der Bodenkolonne untergebracht werden kann (integrierte Absorber/Bioreaktor). Bei Bedarf können jedoch noch zusätzlich Nachreaktoren (z.B. Pumpenvorlagen) in die externen Flüssigkeitskreisläufe eingeschaltet werden.

Es hat sich gezeigt, daß mit einer erfindungsgemäßen Biowäscherkolonne DN 450 mm mit einem Gesamtflüssigkeitsinhalt von 0,9 $m^3$, verteilt auf 10 Böden bei einem Druckverlust von ca. 0,1 bar ein Gasstrom von 300 $m^3/h$, beladen mit verschiedenen organischen Schadstoffen, deren Konzentration im Bereich von 100 mg $C/m^3$ bis 4000 mg $C/m^3$ variierte, weitgehend gereinigt werden konnte, wobei Biomassekonzentrationen bis zu 15 g Trockensubstanz/L in der Suspension gehalten werden konnten. Verstopfungen im Flüssigkeitsbereich traten nicht auf. Gelegentliche Verstopfungen im Innern der Gaskanäle konnten am Ansteigen des Druckverlustes erkannt und mit der oben beschriebenen Spülvorrichtung leicht beseitigt werden. Die Betriebskosten lagen weit unter denen von anderen Abgasbehandlungsverfahren.

So betragen z.B. die Energiekosten (überwiegend für die Gasförderung) weit weniger als 1/10 der Energiekosten (überwiegend für die Flüssigkeitsförderung) einer gleich wirksamen mehrstufigen biologischen Düsenwäscheranlage, wenn schlecht wasserlösliche Substanzen (z.B. Toluol) ausgewaschen werden müssen.

Im folgenden werden Ausführungsbeispiele der Erfindung anhand einer Zeichnung näher erläutert. Es zeigen

Fig. 1      ein Prinzipfließbild des erfindungsgemäßen Bioreaktors zur biologischen Abgasreinigung

Fig. 2      einen Boden des Bioreaktors mit Einbauten für die Einleitung des Abgases in die Flüssigkeit

Fig. 3      verschiedene Ausführungen der Einbauten mit Gasaustrittsöffnungen und

Fig. 4      einen schematischen Schnitt durch einen Boden mit zylindrischen Gaskaminen und

Fig. 5      eine schematische Darstellung (perspektivischer Schnitt) durch einen Boden mit Sprührohren.

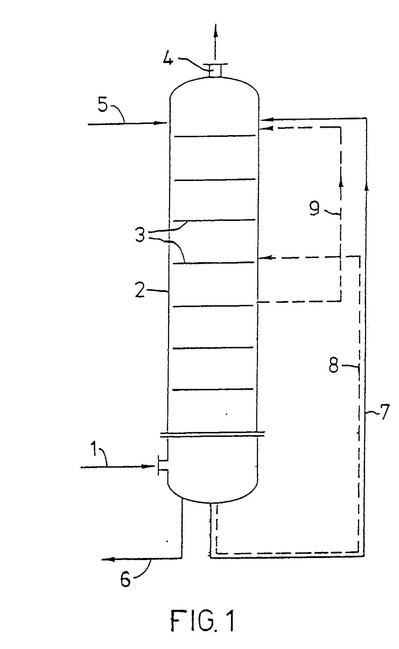

Gemäß Fig. 1 wird das Rohgas durch die Zuleitung 1 am unteren Ende der Bodenkolonne 2 zugeführt. Es strömt dann durch die Böden 3 und tritt als gereinigtes Gas am Kopf der Bodenkolonne 2 durch den Stutzen 4 wieder aus. Nährlösung wird durch die Zuleitung 5 am Kopf der Kolonne oder an anderen Stellen eingespeist. Der Ablauf von Überschußschlamm und verbrauchter Nährlösung kann aus dem Sumpf durch die Leitung 6 oder von einem der Böden 3 erfolgen. Dabei kann eine Sedimentation und Rückführung des Schlammes vorgesehen werden (nicht gezeigt). Ein Teil der Suspension wird normalerweise zum Kopf der Kolonne (Kreislauf 7) oder zu einem der Böden (Kreislauf 8) rezirkuliert. Auch innerhalb der Böden kann eine Rückführung 9 vorgesehen werden. Die gestrichelten Kreisläufe 8 und 9 bilden hier eine zweistufige Rückführung. In die Kreisläufe können Vorrichtungen zur Regelung des pH-Wertes eingebaut werden, um den pH-Wert konstant zu halten. Die Kreisläufe können auch zur Vergleichmäßigung der Biomassekonzentration und zur Versorgung der Mikroorganismen mit anorganischen Nährsalzen dienen, welche gelöst oder in fester Form, beispielsweise in die Kreisläufe eingespeist werden können. In Grenzen läßt sich durch externe Kreisläufe auch eine Vergleichmäßigung der Konzentration von in der Suspension gelösten organischen Stoffen (Nahrung für die Mikroorganismen) und des Sauerstoffs erreichen.

Eine Aufteilung der Abgasbehandlung auf mehrere bezüglich der Gasströmung parallel oder in Reihe betriebener Kolonnen ist in manchen Fällen sinnvoll. So können z.B. bauliche Gründe (Bauhöhe) oder die Nutzung bereits vorhandener Apparate (Kolonnenschüsse, Verdichter etc.) ebenso eine Rolle spielen wie die dann mögliche größere Flexibilität bei Belastungsschwankungen (Zuschalten bei Vergrößerung des Abgasanfalls oder der Konzentration von abzubauenden Schadstoffen).

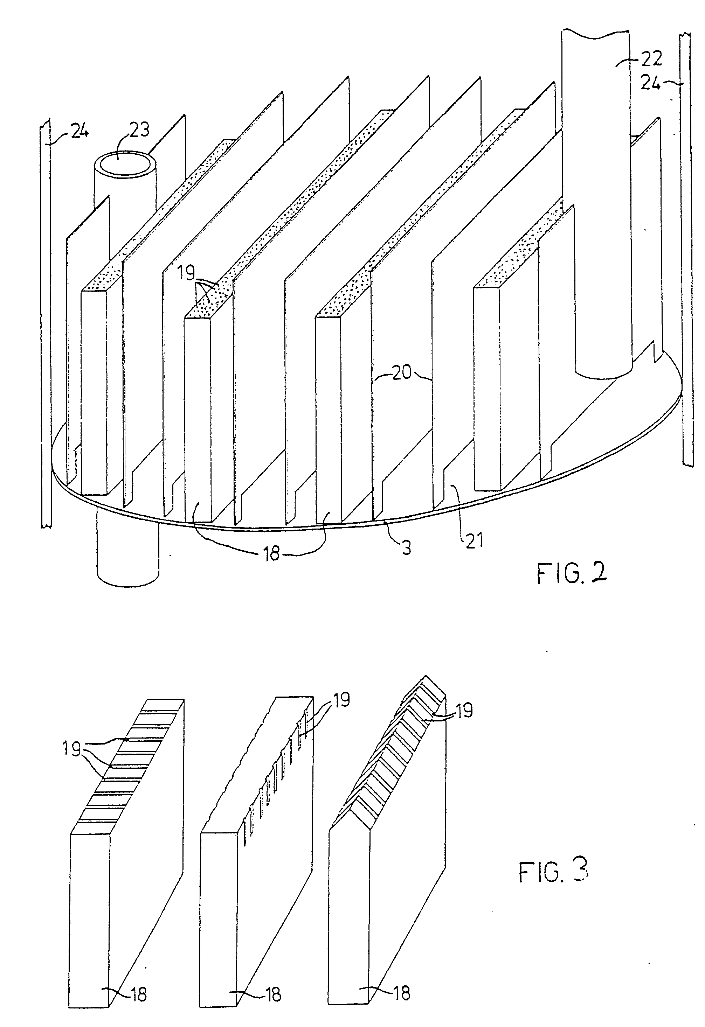

Anhand von Fig. 2 wird der Aufbau des Kolonnenbodens 3 genauer erläutert. Das zu reinigende (Zuleitung 1 in Fig. 1) Gas strömt durch die Kanäle 18 mit rechteckigem Querschnitt (Einbauten) nach oben und tritt durch die hier als Löcher 19 ausgebildeten Gasaustrittsöffnungen in die Flüssigkeit ein. Zwischen den Kanälen 18 sind vertikale Leitbleche 20 angeordnet. Die Leitbleche 20 bewirken Konvektionsströmungen in der Flüssigkeit, wobei die Flüssigkeit in den Zonen zwischen den Gaskanälen 18 und den Leitblechen 20 nach oben strömt, oben das aus den Gaskanälen 18 ausgetretene Gas freisetzt, zum Teil dabei seitlich über die Oberkanten der Leitbleche 20 strömt, in den Zonen zwischen den Leitblechen wieder abwärts strömt und durch die Spalte 21 unmittelbar am Boden 3 wieder in die Zonen zwischen Leitblech 20 und Gaskanal 18 eintritt. Diese um die Leitbleche 20 herum verlaufende Mammutpumpenströmung dient der Vermischung auf den Böden 3 und der Dispergierung der Feststoffe in der Flüssigkeit (Belebtschlamm!). Daneben findet auf den Böden noch eine überlagerte Querströmung der Flüssigkeit von den Zulaufrohren 22 oder Schächten zu den Ablaufrohren 23 statt. Die Abdichtung zwischen den Böden 3 und der Kolonnenwand 24 sowie die Befestigung der Böden 3 in der Kolonne ist aus der Destillationstechnik bekannt und braucht daher hier nicht näher beschrieben zu werden.

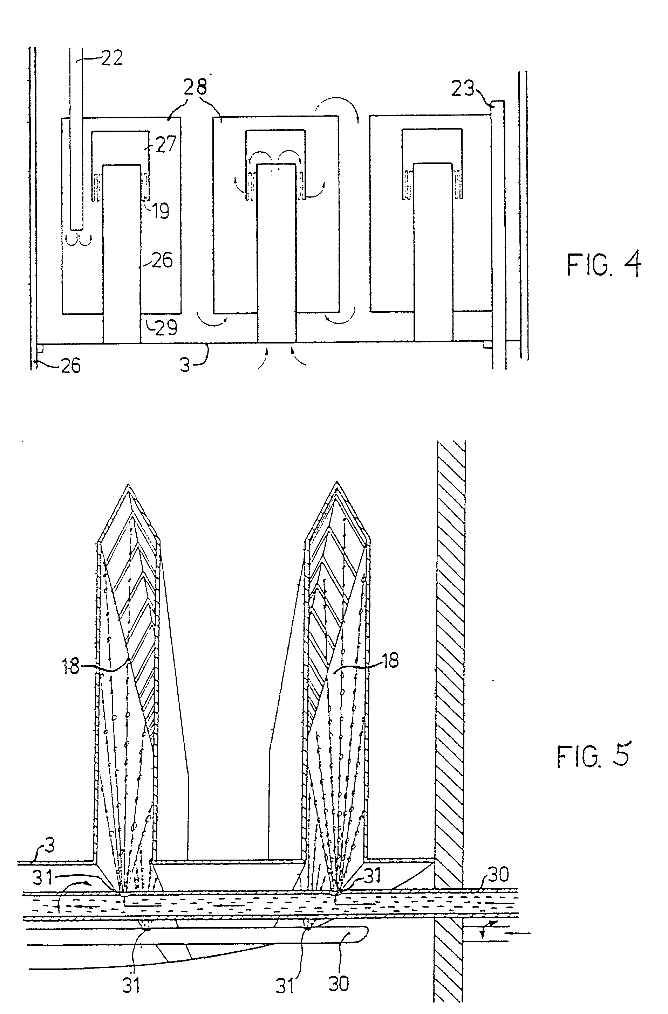

Fig. 3 zeigt verschiedene Ausführungen für die Gasaustrittsöffnungen am oberen Ende der quaderförmigen Kanäle 18. Die Gasaustrittsöffnungen 19 sind hier als horizontal (linkes Teilbild) bzw. vertikal verlaufende Schlitze (mittleres Teilbild) oder als schlitzförmige Öffnungen in einem dachförmig abgeschlossenen Kanal (rechtes Teilbild) ausgeführt.

Fig. 4 zeigt einen Querschnitt durch eine Bodenausführung mit zylindrischen Gaskanälen 26, auf denen Glocken 27 befestigt sind, die Schlitze 19 als Gasaustrittsöffnungen aufweisen. Um die Glocken 27 herum sind konzentrische Leitrohre 28 angeordnet, die zwischen dem eigentlichen Boden 3 und ihrer Unterkante einen Spalt 29 freilassen, durch den die Flüssigkeit aus den Flüssigkeitszonen zwischen den Leitrohren 28 und den Kaminen 26 bzw. den Glocken 27 strömen kann. Die Flüssigkeit strömt dann aufwärts, wird an den Schlitzen 19 begast und strömt über die Oberkanten der Leitrohre 28 in die Zonen zwischen den Leitrohren und dort wieder abwärts (siehe Strömungspfeile). Wie bei der Ausführung nach Fig. 2, strömt die Flüssigkeit durch das Rohr 22 dem Boden zu und am oberen Rand in das Rohr 23 wieder ab. Bei Dauerbetrieb kann in den Gasausstiegskanälen 18 oder Kaminen 26 und Glocken 27 Wandbewuchs durch Mikroorganismen auftreten, welches im Extremfall zu einem Verstopfen dieser der Gasführung dienenden Teile führen kann. Bei der vorzugsweise gewählten Ausführung mit Kanälen läßt sich dieser Wandbewuchs durch Freisprühen oder durch Abspülen entfernen, indem gemäß Fig. 5 Spülrohre 30 mit Sprühöffnungen 31 oder Sprühdüsen senkrecht zu den Kanälen 18 in den Gasraum unter den entsprechenden Böden 3 eingebracht werden und die Gasaufstiegskanäle bei Bedarf freigesprüht bzw. freigespült werden. Die Anzahl der benötigten Rohre kann besonders klein gehalten werden, wenn man diese um ihre Längsachse drehbar anordnet, so daß durch Drehen pro Sprühöffnung oder -düse eine relativ große Kanallänge überstrichen werden kann. Die Sprühöffnungen 31 liegen jeweils unter den Gasaufstiegskanälen 18, so daß durch Drehen der senkrecht zur Längsrichtung der Gaskanäle verlaufenden Spülrohre die gesamten Innenseiten der Gaskanäle freigesprüht bzw. freigespült werden können. Bei größeren Kolonnen werden entsprechend mehr Rohre parallel angeordnet, deren Abstand sich nach der Sprühweite der Düsen bzw. Sprühöffnungen 31 richtet, welche wiederum von der Geometrie (Kanalhöhen, Rohr- und Sprühöffnungsdurchmesser) und vom Vordruck der Spülflüssigkeit abhängt.

Es leuchtet ein, daß die anhand der Fig. 1 bis 5 erläuterten Ausführungsbeispiele vielfältig variiert werden können, ohne den Rahmen der Erfindung zu verlassen.

## Ansprüche

1. Verfahren zur biologischen Abgasreinigung, bei dem das Abgas in Kontakt mit einer Flüssigkeit durch eine Bodenkolonne geleitet wird, die mit einem Flüssigkeitsinhalt pro Boden (3) von mehr als 0,07 m³/m² Kolonnenquerschnitt betrieben wird, dadurch gekennzeichnet,

   a) daß die Biomasse in Form einer wäßrigen Suspension über die Böden (3) verteilt wird,

   b) daß das zu reinigende Gas durch Einbauten (18) mit Gasaustrittsöffnungen (19) in den oberen Teil der auf den Böden (3) befindlichen Flüssigkeitsschicht geleitet wird,

   c) und daß die Flüssigkeitsschicht durch Leitbleche (20) oder Leitrohre (28) alternierend in begaste Zonen mit Aufwärtsströmung und unbegaste Zonen mit Abwärtsströmung unterteilt wird, wobei um die Leitbleche (20) oder Leitrohre (28) herum Konvektionsströmungen erzeugt werden.

2. Verfahren nach Anspruch 1, dadurch gekennzeichnet, daß die Innenflächen der gasführenden Einbauten (18) mittels Sprühdüsen (31) freigespült werden.

3. Verfahren nach Anspruch 2, dadurch gekennzeichnet, daß zum Freispülen der gasführenden Einbauten (18) drehbare Sprühdüsen (31) verwendet werden, so daß die gesamte Innenfläche der Einbauten (18) von den Sprühstrahlen überstrichen wird.

## Claims

1. Process for the biological purification of exhaust gas, in which the exhaust gas is led in contact with a liquid through a plate column which is operated with a liquid volume per plate (3) of more than 0.07 m³ per m² of column cross-sectional area, characterized in that

   a) the biomass is distributed in the form of an aqueous suspension over the plates (3),

   b) the gas to be purified is led through baffles (18) having gas discharge openings (19) in the upper part of the liquid layer present on the plates (3),

   c) and that the liquid layer is subdivided by deflector plates (20) or draught tubes (28) into an alternation of zones with gas dispersion and upward flow and zones without gas dispersion and with downward flow, whereby convection currents are generated around the deflector plates (20) or draught tubes (28).

2. Process according to Claim 1, characterized in that the internal surfaces of the gas-conveying baffles (18) are flushed free by means of spray nozzles (31).

3. Process according to Claim 2, characterized in that for flushing free the gas-conveying baffles (18) rotatable spraying nozzles (31) are used, so that the entire inside surface of the baffles (18) is washed by the jets of spray.

## Revendications

1. Procédé d'épuration biologique de gaz d'échappement, dans lequel le gaz d'échappement passe au contact d'un liquide dans une colonne à plateaux, que l'on fait fonctionner avec un contenu de liquide par plateau (3) de plus de 0,07 m³/m² de section transversale de la colonne, caractérisé en ce que

   a) la biomasse est répartie sous forme d'une suspension aqueuse sur les plateaux (3),

   b) le gaz à épurer est canalisé par des chicanes (18) présentant des ouvertures (19) de sortie de gaz dans la partie supérieure de la couche de liquide se trouvant sur les plateaux (3)

   c) et la couche de liquide est subdivisée par des chicanes (20) ou par des conduits (28) alternativement en zones contenant du gaz à écoulement ascendant et en zones ne contenant pas de gaz à écoulement descendant, des courants de convection étant créés autour des chicanes (20) ou des conduits (28).

2. Procédé suivant la revendication 1, caractérisé en ce que les faces internes des chicanes (18) qui guident le gaz sont rincées au moyen de buses (31) de pulvérisation.

3. Procédé suivant la revendication 2, caractérisé en ce qu'on utilise pour le rinçage des chicanes (18) conduisant le gaz des buses rotatives (31) de pulvérisation, de manière que la surface interne entière des chicanes (18) soit balayée par les jets de pulvérisation.

FIG. 1

FIG. 2

FIG. 3

FIG. 4

FIG. 5